# DEMANDE DE BREVET EUROPEEN

(11) **EP 1 929 866 A1**
(43) Date de publication de la demande: **11.06.2008**
(21) Numéro de dépôt: 07120747.6
(22) Date de dépôt: 27.09.2001
(51) Int. Cl.: A01N 43/16

(54) **Utilisation de polymères et d'oligomères de xyloglucane, et de composes dérives, en tant que produits phytosanitaires et bio fertilisants**

(30) Priorité: 27.09.2000 FR 0012315
(62) Demande divisionnaire de: 01972226.3
(71) Demandeur: Centre National de la Recherche Scientifique, 75794 Paris (FR)
(72) Inventeur: Lienart, Yvette, 38410, Uriage (FR)
(74) Mandataire: Grosset-Fournier, Chantal Catherine

(57) **Abrégé**

L'invention a pour objet l'utilisation d'un composé comprenant une structure osidique de formule :

X₁-X₂-X₃-(X₄)ₙ

dans laquelle X₁, X₂, X₃, et X₄, indépendamment les uns des autres, représentent un ose choisi parmi le glucose, le galactose, le xylose, le fueose, ou l'arabinose, cet ose étant le cas échéant sous forme réduite et/ou étant substitué, notamment par un groupe alkyle ou acyle, tel qu'un groupe méthyle ou acétyle, et n représente 0 ou 1, dans le cadre de l'adaptation des plantes à un stress abiotique, le contrôle de la floraison, le contrôle de la fructification, et l'induction de réactions de défense contre les pathogènes.

## Description

La présente invention a pour objet de nouvelles utilisations de polymères ou d'oligomères de xyloglucane, ainsi que de composés dérivés, dans le domaine phytosanitaire, et celui de la biofertilisation.

Les parois cellulaires des fruits et des végétaux sont formés de polysaccharides, dont principalement la pectine, la cellulose et le xyloglucane qui intervient dans la mise en place des parois (Levy S et al., Plant J. 1997, 11(3) : 373-86). Le xyloglucane se retrouve également en grande quantité dans l'endosperme des graines des Dicotylédones.

Le xyloglucane est un polymère de 1,4-β-glucane substitué différemment selon son origine. Chez les Dicotylédones, les substitutions des chaînes linéaires de 1,4 β-D-glucane impliquent le plus souvent des ramifications de type 1,6 α-D-xylosyl, ou 1,6 α-D-xylose 1,2 β-D-galactosyl, et du fucose peut être associé, en position terminale, au galactose, soit une ramification latérale de type 1,6 α-D-xylose 1,2 β-D-galactose 1,2 α-L-fucosyl. Toujours chez les Dicotylédones, le résidu fucose est absent de l'endosperme, et il peut être remplacé par le résidu α-L-arabinose, par exemple chez certaines Solanacées. Le xyloglucane des Monocotylédones diffère de celui des Dicotylédones par un taux plus faible de substitution par les résidus xylose, galactose et par l'absence de fucose. Le xyloglucane forme avec les microfibres de cellulose des structures pontées qui constituent l'ossature et assurent la flexibilité de la paroi cellulaire des végétaux (Pauly M, Albersheim P, Darvill A , York WS (1999) Plant J, 20 (6): 629-39).

Le xyloglucane est un substrat d'endoxyloglucanases (Vincken JP, Beldman G, Voragen AG Carbohydr Res (1997) 13, 298(4):299-310) ou de xyloglucane endotransglycosylase (Steele NM, Fry SC, Biochem J (1999) 15, 340, 1, 207-211), à savoir d'activités enzymatiques aptes à modifier la structure des parois cellulaires au cours de l'élongation cellulaire, en période de germination, de fructification par exemple et qui sont dépendantes d'hormones notamment d'auxines (Hetherington PR et Fry S. (1993) Plant Physiology, 103, 987-992), et de gibbérellines (Maclachlan G et Brady C (1994) Plant Physiol 105, 965-974).

Le xyloglucane, en particulier un oligomère fucosylé, le nonasaccharide XXFG (décrit dans Fry et al. (1993) Physiologia Plantarum, 89, 1-3), est bien connu pour son effet antiauxinique (Mac Dougall CJ et Fry SC (1989) Plant Physiol 89, 883-887). A l'opposé, des oligomères sans fucose mais avec du galactose comme les oligomères XXLG et XLLG ont un effet auxinique (Mc Dougall GJ et Fry SC (1990) Plant Physiology 93, 1042-1048).

Par ailleurs, de nombreux signaux génèrent des espèces activées d'oxygène (on parle également de "burst oxydatif"). Des espèces activées d'oxygène sont bien connues pour être libérées au cours des interactions plante-pathogène. Des oligosaccharides de diverse origine (acide polygalacturonique, chitosane, O-glycanes ..) ont été répertoriés pour leur capacité à générer un burst oxydatif (Low PS et Heinstein PF (1986) Arch. Biochem. Biophys. 249, 472-479; Rogers KR., Albert F, et Anderson AJ (1988) Plant Physiol 86, 547-553; Apostol I, Heinstein PF et Low PS (1989) Plant Physiol 90, 109-116; Vera-Estrella R, Blumwald E et Higgins VJ (1992) Plant Physiol. 1208-1215; Bolwell GP, Butt VS, Davies DR et Zimmerlin A. (1995) Free Rad. Res. Comm. 23, 517-532 ; Orozco-Cardenas M et Ryan CA (1999) PNAS, 25, 96, 11, 6553-655; Nita-Lazar M, Iwahara S, Takegawa K, Liénart Y (2000) J Plant Physiol, 156, 306-311). Les enzymes NAD(P)H oxydo-reductases pour la libération d'anion superoxyde (Van Gestelen PV, Asard A, Caubergs RJ (1997) Plant Physiol 115, 543-550) et peroxydases pour la formation de peroxyde ou d'anion superoxyde ou de radicaux OH, sont impliquées (Baker CJ et Orlandi EW (1995) Ann. Rev. Phytopathol, 33, 299-321; Chen SX et Schopfer P (1999) Eur Bioch 260, 726- 735). D'autres signaux (acide salicylique, jasmonates, cGMP, NO...) génèrent aussi un burst (Chen Z, Malamy J, Henning J, Conrath U, Sanchez-Casas P, Silva H, Ricigliano J, Klessig DF (1995) Proc Natl Acad Sci USA, 92, 4134-4137; Voros K, Feussner I, Kuhn H, Lee J, Graner A, Lobler M, Parthier B, Wastemack C Eur J Biochem (1998) 15, 251, 36-44; Dumer J, et Klessig J, Wendehenne D, Klessig DF (1998) Proc Natl Acad Sci USA, 95, 10328-10333; Dumer D et Klessig DF (1999) Current Opinion in Plant Biology, 2, 369-374).

Des conditions extrêmes d'environnement (sécheresse, froid, UV, salinité...) déclenchent le même effet.

Le rôle majeur de H₂O₂ dans la génération du burst comme dans la régulation du stress oxydant repose :
- sur sa formation par dismutation à partir de l'anion superoxyde (Bolwell GP, Davies DR, Gerrish C, Auh CK et Murphy TM (1998) Plant Physiol 116, 1379-1385),
- sur son utilisation dans des séquences du métabolisme des acides gras C₁₈ (pour la peroxydation de lipides (Koch E, Meier BM, Eiben H-G, Slusarenko A (1992) Plant Physiol 99, 571-576) ou pour la synthèse d'octadécanoïdes et de leurs dérivés dont certains comme les méthyl-jasmonates sont des métabolites à fonction hormonale,
- sur sa fonction de substrat pour des enzyme peroxydase et catalase, propriété limitant l'accumulation de peroxyde toxique pour la cellule (Baker CJ, Harmon GL, Glazener JA et Orlandi EW (1995) Plant Physiol, 108, 353-359).

Les espèces activées d'oxygène, l'anion superoxyde en particulier, contrôlent différentes voies métaboliques. Elles interviennent dans :
- la biosynthèse des polyamines : des monoamines sont oxydées en aldéhydes avec production de NH₃ et de peroxyde. L'oxydation de la L-arginine par la nitrite-synthase aboutit à la formation d'un précurseur de polyamine (L-citrulline),
- la synthèse de l'éthylène,
- la synthèse des gibbérellines. Plus de 20 oxydases sont impliquées dans la régulation de la biosynthèse des gibbérellines.

Les espèces activées d'oxygène interviennent dans des étapes de transduction de signaux, parce qu'elles sont associées à l'activité de liaison de récepteurs ou à l'activité d'enzymes de transduction (Jabs T, Tschôpe M, Colling C, Hahlbrock K et Scheel D (1997) Proc Natl Acad Sci USA 29, 94, 9, 4800-4805; Dumer J, Wendehenne D, Klessig DF (1998) Proc Natl Acad Sci USA, 95, 10328-10333).

Elles interviennent dans la régulation du potentiel redox cellulaire par l'intermédiaire des groupements thiols (conversion GSSG-GSH, cystine-cystéine, etc..). A ce titre, elles contrôlent des processus de sénescence qui se manifestent à certaines phases de la floraison et de fructification dans différents organes.

Le burst oxydatif interfère avec le métabolisme hormonal, le potentiel le plus performant pour réguler les stades de floraison et de fructification (en particulier leur déclenchement et leur durée sont programmés par une balance hormonale (rapport auxine/cytokinine par exemple), et les espèces activées d'oxygène, dont le peroxyde, contrôlent la synthèse des polyamines).

La présente invention découle de la mise en évidence par les Inventeurs du fait que les polymères et oligomères de xyloglucane, ainsi que des composés dérivés de ces derniers, ont un effet de stimulation de l'enzyme glutathion réductase, de l'enzyme phospholipase D chez les plantes, ainsi que des glycosylhydrolases.

En stimulant l'enzyme glutathion réductase, les polymères et oligomères de xyloglucane déclenchent des réactions d'adaptation à tout stress oxydant, comme le froid en particulier, en limitant les effets toxiques des espèces activées d'oxygène (Allen RD, Webb RP, Schake SA (1997) Free Radic Biol Med, 23 (3):473-479; O'Kane D, Gill V, Boyd P, Burdon R (1996) Planta, 198 (3):371-377), et ils régulent le potentiel redox de la cellule, ce qui modifie l'activité d'enzymes ou de protéines thiol-dépendantes, phospholipase D, thiol-protéases et inhibiteurs de thiol-protéases en particulier (Taher MM, Mahgoub MA, Abd-Elfattah (1998) AS Biochem Mol Biol Int 46 3, 619-28), ainsi que par un effet d'induction d'un inhibiteur de protéase thiol-dépendante, et ce sans pour autant activer en cascade d'autres systèmes enzymatiques dans des proportions néfastes pour la plante.

En stimulant l'activité phospholipase D, les polymères et oligomères de xyloglucane amplifient l'effet hormonal de l'acide abscissique dans la mesure où l'activation de l'enzyme conduit à la production d'acide phosphatidique (qui mime les effets de l'acide abscissique). A ce titre, ils peuvent révéler un antagonisme contre les gibberellines, l'éthylène ou les jasmonates (Grill E., Himmelbach A. (1998) Current Opinion in Plant Biology, 1, 1, 5, 412-418; Ritchie S, Gilroy S (1998) Plant Biology, 95, 5, 3, 2697-2702; Moons A, Prinsen E, Bauw G, Van Montagu M (1997) Plant Cell 9 12, 2243-59).

Actuellement, en dehors des engrais chimiques, le contrôle du développement des végétaux repose principalement sur :
- l'utilisation de compositions agricoles enrichies en oligo-éléments, en composants nitrate, phosphate, et potassium, en polyamines ou en certaines hormones,
- l'utilisation de micro-organismes, naturels ou génétiquement modifiés, qui améliorent la qualité du sol, favorisent la croissance des végétaux ou accroissent le rendement des cultures ; il s'agit notamment des rhizobiacées comme *R. meliloti* et *B. japonicum,* des bactéries fixatrices d'azote libre, comme *Bacillus* et *Pseudomonas,* et des champignons comme *Penicillium,*
- le développement de plantes transgéniques. Cette technologie se heurte à des problèmes législatifs et à une forte opposition de la part des consommateurs; de plus, elle n'a pas encore abouti à des applications satisfaisantes dans le secteur des biofertilisants.

Un des buts de la présente invention est de fournir de nouvelles compositions utilisables dans le domaine phytosanitaire et de la biofertilisation, et plus particulièrement pour lutter contre le stress abiotique chez les plantes, et contrôler la floraison et la fructification.

La présente invention a pour objet l'utilisation d'un composé comprenant une structure osidique de formule :

X₁-X₂-X₃-(X₄)ₙ

dans laquelle X₁, X₂, X₃, et X₄, indépendamment les uns des autres, représentent un ose choisi parmi le glucose, le galactose, le xylose, le fucose, ou l'arabinose, cet ose étant le cas échéant sous forme réduite et/ou étant substitué, notamment par un groupe alkyle ou acyle, tel qu'un groupe méthyle ou acétyle, et n représente 0 ou 1,

X₁, X₂, X₃, et X₄, indépendamment les uns des autres, étant le cas échéant substitué par un ou plusieurs oses choisis parmi le glucose, le galactose, le xylose, le fucose, ou l'arabinose, et/ou par un ou plusieurs enchaînements osidiques de formule X₅-X₆-(X₇)ₘ dans laquelle X₅, X₆, et X₇, indépendamment les uns des autres, représentent un ose choisi parmi le glucose, le galactose, le xylose, le fucose, ou l'arabinose, et m représente 0 ou 1,

l'un au moins de X₁, X₂, X₃, ou X₄, ou, le cas échéant, de X₅, X₆, ou X₇ représentant un xylose ou un fucose,
ou d'un composé dérivé de ceux définis ci-dessus, notamment par modification ou substitution d'un ou plusieurs oses susmentionnés, lesdits composés et leurs dérivés ayant la propriété :
- de stimuler la glutathion réductase, et donc à ce titre d'induire des réactions anti-oxydatives de défense (encore désignées réactions d'adaptation à un stress oxydant), notamment par changement du potentiel redox cellulaire et/ou par activation d'un inhibiteur de protéase thiol-dépendante,
- et/ou de stimuler la phospholipase D chez les plantes, et donc à ce titre d'amplifier l'effet hormonal de l'acide abscissique,
- et/ou stimuler des glycosylhydrolases, et donc à ce titre d'induire des réactions de défense contre les pathogènes (par un mécanisme de lyse des micro-organismes par dégradation enzymatique de leurs parois cellulaires) et/ou de contrôler certaines phases de développement des plantes (germination, fécondation, différenciation cellulaire au cours de la floraison ou de la fructification),
dans le cadre d'applications liées aux propriétés susmentionnées desdits composés, à savoir :
- l'adaptation des plantes à un stress abiotique, tel que l'adaptation au froid, ou à un stress hydrique tel que la sécheresse, l'humidité ou la salinité (Tao DL, Oquist G, Wingsle G (1998) Cryobiology 37, 1, 38-45; Gueta-Dahan Y, Yaniv Z, Zilinska BA, Ben Hayyim G (1997) Planta, 203, 4, 460-469),
- le contrôle de la floraison,
- le contrôle de la fructification,
- l'induction de réactions de défense contre les pathogènes tels que les bactéries, virus, champignons.

Par contrôle de la floraison, on entend plus particulièrement le contrôle des phases clefs du processus de floraison comme l'antheresis (Wang M, Hoekstra S, van Bergen S, Lamers GE, Oppedijk BJ, Heijden MW, de Priester W, Schilperoort RA (1999) Plant Mol Biol 39, 3:489-501), ou le développement des boutons floraux (Lim CO, Lee SI, Chung WS, Park SH, Hwang I, Cho MJ (1996), Plant Mol Biol, 30, 2, 373-379), comme les phases d'induction ou d'abscission florale (Colasanti J, Sundaresan V (2000) Trends Biochem Sci, 25, 5, 236-240.

Par contrôle de la fructification, on entend plus particulièrement le contrôle du déclenchement et/ou de la durée de la phase de maturation (Fan L, Zheng S, Wang X (1997) Plant Cell, 9, 12, 2183-9; Ryan SN, Laing WA, Mc Canus MT (1998), Phytochemistry, 49, 4, 957-963), le contrôle du métabolisme des parois cellulaires en rapport avec l'accumulation des sucres et des phénols (Fillion L, Ageorges A, Picaud S, Coutos-Thevenot P, Lemoine R, Romieu C, Delrot S (1999) Plant Physiol 120 (4):1083-94), et le contrôle de l'abscission des feuilles et des fruits (Gomez-Cadenas A, Mehouachi J, Tadeo FR, Primo-Millo E, Talon M (2000), Planta, 210, 4, 636-643).

L'induction de réactions de défense contre les pathogènes est en rapport avec l'élicitation de PR-protéines, en particulier des enzymes 1,3-β D glucanase et endochitinase aussi connues pour intervenir aussi dans le développement des plantes (Munch-Garthoff S, Neuhaus JM, Boller T, Kemmerling B, Kogel KH (1997) Planta 201, 2, 235-44 ; Buchter R, Stromberg A, Schmelzer E, Kombrink E (1997) Plant Mol Biol 35 , 6, 749-61; Robinson SP, Jacobs AK, Dry IB (1997) Plant Physiol 114, 3, 771-8).

Le contrôle de remaniements métaboliques et cataboliques dont certains tissus sont l'objet en période de différenciation ou de sénescence, est en rapport avec l'élicitation des enzymes 1,4-β-D-glucanase et β-D-xylosidase (Trainotti L, Spolaore S, Ferrarese L, Casadoro G (1997) Plant Mol Biol 34 (5):791-802; Kalaitzis P, Hong SB, Solomos T, Tucker ML (1999) Plant Cell Physiol 40(8), 905-8).

L'invention a plus particulièrement pour objet l'utilisation susmentionnée, de composés dans lesquels les oses sont des résidus glycosyl (L) ou (D), le cas échéant sous forme réduite, et/ou sous forme α ou β, le cas échéant sous forme pyranose ou furanose, et sont liés entre eux par des liaisons du type 1→2, 1→3, 1→4, ou 1→6, et plus particulièrement du type α1→2 dans le cas de la liaison d'un fucose à un galactose, β1→2 dans le cas de la liaison d'un galactose à un xylose, β1→4, dans le cas de la liaison d'un glucose à un glucose, ou α1→6, dans le cas de la liaison d'un xylose à un glucose.

L'invention a plus particulièrement pour objet encore, l'utilisation susmentionnée de composés de formule :

X₁-X₂-X₃-(X₄)ₙ

dans laquelle X₁, X₂, X₃, et X₄, indépendamment les uns des autres, représentent un ose choisi parmi le glucose, le galactose, le xylose, le fucose, ou l'arabinose, et n représente 0 ou 1, l'un au moins de X₁, X₂, X₃, ou X₄, représentant un xylose ou un fucose.

A ce titre, l'invention concerne plus particulièrement l'utilisation susmentionnée:
- de composés de formule :

   X₁-X₂-X₃-(X₄)ₙ

   dans laquelle :
   - X₁ représente le fucose,
   - X₂ représente un galactose,
   - X₃ représente le xylose ou le glucose,
   - X₄ représente un glucose, le cas échéant substitué par un ose tel que le glucose,
   - chacun de X₁, X₂, X₃, et X₄ étant des résidus glycosyl (L) ou (D) sous forme α ou β, et n représente 0 ou 1,
X₁, X₂, X₃, et X₄, étant le cas échéant substitués, notamment par un groupe alkyle, tel qu'un groupe méthyle,
tels que les composés de formule :

α-L-Fuc(1→2)β-D-Gal(1→2)α-D-Xyl,

α-L-Fuc(1→2)β-D-Gal(1→4)β-D-Glc, ou 2'-fucosyl lactose (dont le procédé d'obtention à partir du lait ou des urines est plus particulièrement décrit dans Charlwood J, Tolson D, Dwek M, Camilleri P (1999) Anal Biochem 10, 273, 2, 261-77),
méthyl(α-L-Fuc(1→2)β-D-Gal(1→2)β-D-Xyl) ou méthyl(α-L-Fuc(1→2)β-D-Gal(1→2)α-D-Xyl) (dont le procédé d'obtention est plus particulièrement décrit dans Lopez R, Montero E, Sanchez F, Canada J, Fernandez-Mayoralas A (1994) J Org Chem 59, 7027-7032; Watt DK, Brasch DJ, Larsen DS, Melton LD, Simpson J (2000) Carbohydr Res, 5, 325(4):300-12),

α-L-Fuc(1→2)β-D-Gal(1→2)α-D-Xyl(1→6)β-D-Glc,

α-L-Fuc(1→2)β-D-Gal(1→2)β-D-Xyl(1→6)β-D-Glc,

α-L-Fuc(1→2)β-D-Gal(1→2)α-D-Xyl(1→6)β-D-Glc(1→4)β-D-Glc, encore désigné FG (décrit dans Fry et al. (1993) Physiologia Plantarum, 89, 1-3), et dont le procédé de préparation par synthèse chimique est décrit dans Pavlova ZN, Ash AO, Vnuchkova VA, Babakov AV, Torgov VI, Nechaev OA, Usov AI, Shibaev VN (1992) Plant Science 85, 131-134, et dont le procédé de préparation par hydrolyse et chromatographie se trouve décrit dans Vincken JP, Beldman G, Niessen WMA, Voragen AGJ (1996) Carbohydrate Polymers, 29, 1, 75-85,
le résidu osidique en position X₃ lorsque n = 0, ou en position X₄, ou substituant celui en position X₄, dans les formules des composés ci-dessus, étant le cas échéant sous forme réduite,
- ou de composés de formule :

| | | |
|---|---|---|
| α-D-Gal(1→2)β-D-Xyl(1→6)β-D-Glc(1→4)β-D-Glc | | encore désigné LG |
| α-D-Xyl(1→2)β-D-Gal(1→2)β-D-Xyl | | |
| α-D-Xyl(1→6)β-D-Glc(1→4)β-D-Glc | | encore désigné XG |
| β-D-Xyl(1→4)β-D-Glc(1→4)β-D-Glc isolé *d'Ulva lactuca* (Lahaye M, Jegou D, Buleon A (1994), Carbohydrate Research 262, 115-125) | | |
| α-D-Xyl(1→2)β-D-Glc(1→4)β-D-Glc | | |
| β-L-Ara(1→3)α-L-Ara(1→2)α-D-Xyl composé T (York WS, Kumar Kolli VS, Orlando R, Albersheim P, Darvill AG (1996) Carbohydr Res 285, 99-128) | | |
| α-L-Ara(1→2) | β-D-Glc | composé A |
| α-D-Xyl(1→6) | | |
| α-D-Xyl(1→6) | β-D-Glc | composé B |
| β-D-Xyl(1→2) | | |
| α-L-Ara(1→2)α-D-Xyl(1→6)β-D-Glc | | composé S |
| α-L-Ara(1→3)β-D-Xyl(1→2) | β-D-Glc | composé C |
| α-D-Xyl(1→6) | | |

(dont les procédés d'obtention sont plus particulièrement décrits dans Vincken JP, Beldman G, Niessen WMA, Voragen AGJ (1996) Carbohydrate Polymers, 29, 1, 75-85)
dans lesquelles Fuc représente le fucose, Gal représente le galactose, Glc représente le glucose, Ara représente l'arabinose, et Xyl représente le xylose.

L'invention concerne également l'utilisation susmentionnée, de composés de formule :

X₁-X₂-X₃-(X₄)ₙ

dans laquelle n représente 0 ou 1, X₁, X₂, X₃, et X₄, représentent un glucose, le cas échéant sous forme réduite, sous forme α ou β, l'un au moins de X₁, X₂, X₃, ou X₄, étant substitué par un ou plusieurs oses choisis parmi le glucose, le galactose, le xylose, le fucose, ou l'arabinose, et/ou par un ou plusieurs enchaînements osidiques de formule X₅-X₆-(X₇)ₘ dans laquelle X₅, X₆, et X₇, indépendamment les uns des autres, représentent un ose choisi parmi le glucose, le galactose, le xylose, le fucose, ou l'arabinose, et m représente 0 ou 1,
l'un au moins de X₅, X₆, ou X₇ représentant un xylose ou un fucose.

L'invention a plus particulièrement pour objet l'utilisation susmentionnée, de composés de formule :

X₁-X₂-X₃-(X₄)ₙ

dans laquelle n représente 0 ou 1, X₁, X₂, X₃, et X₄, représentent un glucose, le cas échéant sous forme réduite, sous forme α ou β, l'un au moins de X₁, X₂, X₃, ou X₄, étant substitué par un ou plusieurs oses choisis parmi le glucose, le galactose, le xylose, le fucose, ou l'arabinose, et/ou par un ou plusieurs enchaînements osidiques de formule X₅-X₆-(X₇)ₘ dans laquelle dans laquelle X₅ représente un xylose, X₆ représente un galactose, X₇ représente un fucose, et m représente 0 ou 1.

A ce titre, l'invention concerne plus particulièrement l'utilisation susmentionnée, des composés de formules suivantes : ou les composés désignés XL, XLGG, XLXG, LS, AXXG,
(dont les procédés d'obtention sont plus particulièrement décrits dans Mc Dougall GJ, Fry SC (1989) Plant Physiol 89, 883-887; Mc Dougall GJ, Fry SC (1990) Plant Physiol 93, 1042-1048 ; Konishi T, Mitsuishi Y, Kato Y (1998) Biosci Biotechnol Biochem, 62,12, 2421-2424; Renard CMGC, Lomax JA, Boon J J (1992) Carbohydrate Research 232, 303-320, pour la préparation des oligomères XXFG, XXXG, XLGG ; Vincken JP, Beldman G, Niessen WMA,Voragen AGJ (1996) Carbohydrate Polymers, 29, 1, 75-85, pour la préparation des oligomères XG, XXG, FG, XLXG ; Spronk BA, Rademaker GJ, Haverkamp J, Thomas-Oates JE, Vincken JP, Voragen AG, Kamerling JP, Vliegenthart JF (1997) Carbohydrate Research, 305, 2, 233-242, pour la préparation de GFG, GFGGF ; et Hantus S, Pauly M, Darvill AG, Albersheim P, York WS (1997) Carbohydrate Research 28, 304, 1, 11-20 pour la préparation du nonasaccharide dans lequel L-Fuc est remplacé par L-Gal),
le résidu glucose en position X₄ dans les formules des composés ci-dessus, ou celui en position X₃ dans le composé XXG, étant le cas échéant sous forme réduite.

L'invention a également pour objet l'utilisation susmentionnée, de polymères de formule [X₁-X₂-X₃-(X₄)ₙ]_{N} dans laquelle :
- n représente 0 ou 1, X₁, X₂, X₃, et X₄, représentent un glucose, le cas échéant sous forme réduite, sous forme α ou β, l'un au moins de X₁, X₂, X₃, ou X₄, étant substitué par un ou plusieurs oses choisis parmi le glucose, le galactose, le xylose, le fucose, ou l'arabinose, et/ou par un ou plusieurs enchaînements osidiques de formule X₅-X₆-(X₇)ₘ dans laquelle X₅, X₆, et X₇, indépendamment les uns des autres, représentent un ose choisi parmi le glucose, le galactose, le xylose, le fucose, ou l'arabinose, et m représente 0 ou 1, l'un au moins de X₅, X₆, ou X₇ représentant un xylose ou un fucose,
- N représente un nombre entier compris entre environ 50 et environ 300, et de préférence compris entre environ 50 et environ 100,
- ou N représente un nombre entier compris entre environ 2 et environ 50, et de préférence compris entre environ 2 et environ 20, notamment entre 5 et 12.

L'invention a plus particulièrement pour objet l'utilisation susmentionnée, de polymères de formule [X₁-X₂-X₃-(X₄)ₙ]_{N} définie ci-dessus dans laquelle N représente un nombre entier inférieur ou égal à 12, et de préférence inférieur ou égal à 5 (à savoir des polymères dont le degré de polymérisation DP est inférieur ou égal à 12).

L'invention a également pour objet l'utilisation susmentionnée d'enchaînements successifs d'au moins deux unités représentées par un composé de formule X₁-X₂-X₃-(X₄)ₙ dans laquelle n représente 0 ou 1, X₁, X₂, X₃, et X₄, représentent un glucose, le cas échéant sous forme réduite, sous forme α ou β, l'un au moins de X₁, X₂, X₃, ou X₄, étant substitué par un ou plusieurs oses choisis parmi le glucose, le galactose, le xylose, le fucose, ou l'arabinose, et/ou par un ou plusieurs enchaînements osidiques de formule X₅-X₆-(X₇)ₘ dans laquelle X₅, X₆, et X₇, indépendamment les uns des autres, représentent un ose choisi parmi le glucose, le galactose, le xylose, le fucose, ou l'arabinose, et m représente 0 ou 1, l'un au moins de X₅, X₆, ou X₇ représentant un xylose ou un fucose,
l'une au moins des unités desdits enchaînements étant telle que l'un au moins des oses ou enchaînements osidiques liés à X₁, X₂, X₃, ou X₄, est respectivement différent de l'un des oses ou enchaînements osidiques liés à X₁, X₂, X₃, ou X₄, d'une ou plusieurs des autres unités desdits enchaînements.

L'invention a plus particulièrement pour objet l'utilisation susmentionnée d'enchaînements d'unités tels que définis ci-dessus, dans lesquels le nombre d'unités est inférieur ou égal à 12, de préférence inférieur ou égal à 5.

A ce titre, l'invention concerne plus particulièrement l'utilisation susmentionnée, de composés de formule : (dont les procédés d'obtention sont plus particulièrement décrits dans : Sims IM, Munro SLA, Currie G, Craik D, Basic A (1996) Carbohydrate Research 293, 147- 172 (structure à xylose chez le tabac), et Vincken JP, Wijsman AJM, Beldman G, Niessen WMA, Voragen AGJ (1996) Carbohydrate Research, 288, 219-232, pour les structures à arabinose chez la pomme de terre),
le résidu glucose en position terminale dans les formules des composés ci-dessus, étant le cas échéant sous forme réduite, et sous forme α ou β,
ou encore les composés de formule XXFXXG, XLFGXXXG (Vincken et al. (1996) susmentionné), XFFGXXXG , XXFGAXXG (Hisamatsu M, York W, Darvill A, Albersheim P (1992) Carbohydr Research, 227, 45-71), GFGGFG (Spronk BA et al. (1997) susmentionné.

L'invention concerne également l'utilisation susmentionnée de polymères ou d'oligomères de xyloglucane, ou de leurs dérivés tels que définis ci-dessus, le cas échéant liés à d'autres glycanes (ou entrant dans la composition d'autres glycanes), en particulier de polymères constituant les parois cellulaires des plantes ou représentant la partie glycane de glycoprotéines, tels qu'obtenus :
- à partir de plantes, notamment par extraction de semences, feuilles, racines, fruits, en particulier à partir :
   - de pommes (*Malus malus* L., *Rosaceae*), notamment selon la méthode décrite dans Renard CMGC, Renard Lomax JA, Boon J J (1992) Carbohydrate Research 232, 303-320; Vincken JP, Beldman G, Niessen WMA,Voragen AGJ (1996) Carbohydrate Polymers, 29, 1, 75-85 ; Spronk BA, Rademaker GJ, Haverkamp J, Thomas-Oates JE, Vincken JP, Voragen AG, Kamerling JP, Vliegenthart JF (1997) Carbohydrate Research, 305, 2, 233-242),
   - de tubercules de pommes de terre, notamment selon la méthode de Vincken JP, Wilsjman AJ, Beldman G, Niessan WM, Voragen AG (1996) Carbohydrate Research, 19, 288, 219-232,
      - d'*Echinacea,* notamment de racines ou de feuilles selon la méthode décrite dans Wagner H, Jurcic K (1991) Arzneimittelforschung 41(10):1072-6,
      - ou de graines de *Tropaeolum majus* L. (McDougall GJ et Fry SC (1989) Plant Physiol 89, 883-887), ou de d'*Hymenaea courbaril* L (Buckeridge MS, Crombie HJ, Mendes CJ, Reid JS, Gidley MJ, Vieira CC(1997) Carbohydr Res 5, 303, 2, 233-7; Vargas-Rechia C, Reicher F, Sierakowski MR, Heyraud A, Driguez H, Lienart Y, (1998) Plant Physiology, 116,1013-1021),
- à partir de suspensions cellulaires de plantes, notamment d'*Acer,* de *Rosa,* de *Mentha,* de *Nicotiana,* de *Populus,* de *Dioscorea deltoidea,* de *Digitalis lanata,* ou d*'Echinacea,* en particulier par extraction de parois cellulaires, ou par isolement à partir du milieu de culture, notamment selon les méthodes décrites dans :
   - Hisamatsu M, York WS, Darvill AG, Albersheim P (1992) Carbohydrate Research 227, 45-71; York WS, Imallomeni G, Hisamatsu M, Albersheim P, Darvill AG (1995) Carbohydrate Research 1, 267, 1, 79-104, s'agissant d'*Acer,*
   - McDougall GJ et Fry SC (1989) Plant Physiol 89, 883-887 et Mc Dougall GJ et Fry SC (1991) Carbohydrate Research 219 , 123-132, s'agissant de *Rosa,*
   - Maruyama K, Goto C, Numata M, Suzuki T, Nakagawa Y, Hoshino T, Uchiyama (1996) Phytochemistry 41(5):1309-14, s'agissant de *Mentha,*
   - Sims IM, Munro SL, Currie G, Craik D, Bacic A (1996) Carbohydr Res 31;293(2):147-72, s'agissant de *Nicotiana,*
   - Roesler J, Steinmuller C, Kiderlen A, Emmendorffer A, Wagner H, Lohmann-Matthes MLJ (1991) Immunopharmacol. 13 (7), 931-41, s'agissant d'*Echinaceae,*
   - Hayashi T, Takada T (1994) Biosc. Biotechn Biochem 58, 9, 1707-8, s'agissant de *Populus,*
- à partir de champignons tels que *Lentinus edodes, Ganoderma lucidum, Schizophyllum commune, Trametes versicolor, Inonotus obliquus, et Flammulina velutipes,* notamment par extraction du mycélium, ou par isolement d'un milieu de culture, notamment selon la méthode décrite dans Wasser SP, Weis AL (1999) Crit Rev Immunol 19(1):65-96,
- à partir d'algues, telles que *Ulva lactuca,* ou *Ulva rigida,* notamment selon la méthode décrite dans Ray B, M Lahaye (1995), Carbohydrate Research 274, 251-261; Lahaye M, Jegou D, Buleon A (1994), Carbohydrate Research 262, 115- 125.

L'invention a également pour objet l'utilisation susmentionnée, d'oligomères de xyloglucane, ou de dérivés tels que définis ci-dessus, tels qu'obtenus :
* par synthèse chimique ou chemoenzymatique, notamment par endo-transglycosylation selon la méthode décrite dans York WS, Hawkins R Glycobiology (2000) 10, 2, 193-201,
* par fermentation de souches bactériennes génétiquement modifiées ou non,
* par hydrolyse de polymères renfermant du xyloglucane (ou des motifs structuraux du xyloglucane), ou de glycanes représentant la partie glycane de glycoprotéines, à l'aide d'enzymes appropriées telles que :
   - des cellulases, et plus particulièrement d'endo-β-1,4-glucanases de *Trichoderma,* telle que celle de *Trichoderma viride,* ou de *T. reesei,* ou celle d'*Aspergillus,* telle que celle d'*A. niger,* et d'exo cellulases d'*Irpex lacteus,* ces enzymes étant des enzymes d'extraction ou recombinantes, notamment selon les méthodes d'isolement utilisant des endoglucanases d'extraction décrites dans Renard CMGC, Searle-can Leewen MJF, Voragen AGJ, Thibault JF, Pilnik W (1991) Carbohydrate Polymers 14, 295-314; Renard CMGC, Searle-can Leewen MJF, Voragen AGJ, Thibault JF, Pilnik W (1991) Carbohydrate Polymers 15, 13-32; ou selon les méthodes d'isolement utilisant des cellobiohydrolases d'extraction décrites dans Amano Y, Shiroishi M, Nisizawa K, Hoshino E, Kanda T (1996) J Biochem (Tokyo) 120 (6):1123-9; ou selon les méthodes utilisant des endoglucanases recombinantes décrites dans Pauly M, Andersen LN, Kauppinen S, Kofod LV, York WS, Albersheim P, Darvill A (1999) Glycobiology 9 (1) 93-100, ou utilisant d'autres endoglucanases (E.C. 3.2.1.4) de la famille GH 12 (selon "IUB-MB Enzyme nomenclature"), en particulier des organismes *Aspergillus aculeatus, Thermotoga maritima* et *Thermotoga neapolitana* obtenues par voie recombinante,
   - des glycosidases telles que β-D-glucosidase, α-L-fucosidase, α-L-xylosidase, β-D-xylosidase, α-D-fucosidase, ces enzymes étant des enzymes d'extraction ou recombinantes, notamment selon la méthode décrite dans York WS, Harvey LK, Guillen R, Alberheim P, Darville A (1993) Carbohydrate Research , 248, 285-301,
ledit traitement enzymatique étant suivi de plusieurs étapes de purification des oligomères de xyloglucane obtenus, notamment par chromatographie selon la méthode décrite dans Mc Dougall GJ, Fry SC (1990) Plant Physiol 93, 1042-1048; Hisamatsu M, York WS, Darvill AG, Albersheim P (1992) Carbohydrate Research 227, 45-71.

L'invention a également pour objet un procédé de stimulation de la glutathion réductase chez les plantes, caractérisé en ce qu'il comprend une étape de traitement des plantes avec au moins un composé défini ci-dessus, notamment par irrigation du sol sur lequel ces plantes sont cultivées, avec une composition comprenant ledit composé, ou par enrobage des semences avec une telle composition, ou par pulvérisation foliaire en champ d'une telle composition sur les plantes à traiter.

L'invention concerne plus particulièrement l'application du procédé susmentionné, à la mise en oeuvre d'un procédé d'adaptation des plantes à un stress abiotique, tel que l'adaptation au froid, ou à un stress hydrique tel que la sécheresse, l'humidité ou la salinité.

L'invention a également pour objet un procédé de stimulation de la production de la phospholipase D chez les plantes, caractérisé en ce qu'il comprend une étape de traitement des plantes avec au moins un composé défini ci-dessus, notamment de la manière indiquée ci-dessus.

L'invention a plus particulièrement pour objet l'application du procédé susmentionné, à la mise en oeuvre d'un procédé de contrôle de la floraison, et plus particulièrement d'un procédé de contrôle de l'induction florale, de la durée de la floraison, et de l'abscission des fleurs, et/ou à la mise en oeuvre d'un procédé de contrôle de la fructification des plantes, et plus particulièrement d'un procédé de contrôle du déclenchement et de la durée de la maturation des fruits, de l'abscission des feuilles et des fruits.

L'invention a également pour objet un procédé de stimulation de la production des glycosylhydrolases chez les plantes, caractérisé en ce qu'il comprend une étape de traitement des plantes avec au moins un composé défini ci-dessus, notamment de la manière indiquée ci-dessus.

L'invention a plus particulièrement pour objet l'application du procédé susmentionné, à la mise en oeuvre d'un procédé d'induction de réactions de défense contre les pathogènes, tels que les bactéries, virus, champignons, et/ ou de contrôle de certaines phases de développement des plantes (germination, fécondation, différenciation cellulaire au cours de la floraison ou de la fructification).

Avantageusement, les compositions susmentionnées comprenant au moins un composé défini ci-dessus et utilisées dans le cadre de la présente invention, se présentent en tant qu'intrant agricole sous forme solide (notamment poudre, granulés, pastilles), ou sous forme liquide (notamment en solution aqueuse), associé ou non à d'autres composants d'intrant agricole.

Parmi les plantes susceptibles d'être traitées dans le cadre de la présente invention, on citera principalement les plantes agronomiquement utiles, telles que la vigne, les arbres fruitiers (notamment pommier, poirier, noyer), les céréales (notamment riz, orge), les oléagineux (notamment soja, colza, tournesol), les protéagineux (notamment les pois), et les cultures maraîchères (notamment les tomates).

L'invention sera davantage illustrée à l'aide de la description détaillée qui suit des effets de composés selon l'invention sur la stimulation de la glutathion reductase, et de la phospholipase D, ainsi que sur d'autres systèmes liés à ces enzymes

### I) Elicitation d'un "burst oxydatif": génération de H₂O₂

### Méthodologie

Préparation des protoplastes de *Rubus fruticosus* selon Vargas-Rechia (1998). Le rendement en protoplastes est de l'ordre 70 à 85% du nombre initial de cellules utilisées; la viabilité des protoplastes, de l'ordre de 90 à 95 %, a été contrôlée en utilisant l'indicateur bleu d'Evans.

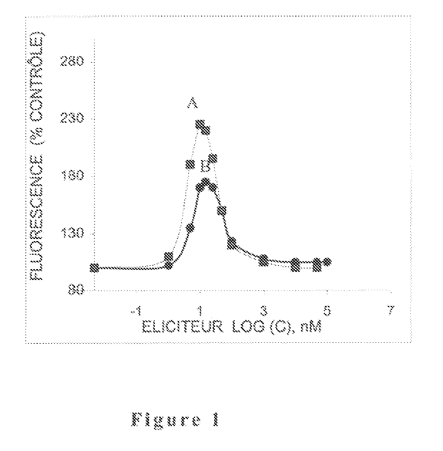

Dosage de H₂O₂ selon Apostol et al. (1989). Incubation à différentes températures de 1.10⁶ protoplastes dans des puits de microplaques en présence de 2 µM pyranine (λₑₓ 405 nm, λₑₘ 512 nm), de l'éliciteur (0 à 100 µM) : 2'-fucosyl-lactose (composé A), xyloglucane XXFGol, correspondant à la forme réduite du nonasaccharide fucosylé dont l'ose X₄ est sous forme réduite (composé B). Les variations de fluorescence de la pyranine (ΔF₅₁₂ min⁻¹) permettent de doser H₂O₂. Les résultats sont indiqués dans la figure 1.

Exploitation des données expérimentales : La vitesse de la réaction est donnée par (ΔF₅₁₂ min⁻¹). Trois courbes de cinétique au moins sont tracées par échantillon et par condition expérimentale. Un point sur le graphe correspond à la pente de la courbe de régression déduite de 6 courbes de cinétique au moins.

### Résultats

### Génération de H₂O₂: détection et caractérisation de la réponse d'élicitation

Le "burst" oxydatif est évalué d'après le "quenching "de la pyranine à 25°C; la valeur de référence 100% correspond à la fluorescence dans les contrôles (suspensions de protoplastes non élicités)

### a) Effet de la dose en éliciteur (Figure 1)

Réponse optimale à :
- 10 nM (225%) pour le composé A
- 15 nM (175 %) pour le composé B

Le 2' - fucosyl lactose comme signal inducteur d'un burst oxydant est plus performant que l'oligomère de xyloglucane. Par contre, les doses optimales pour les 2 produits sont très proches.

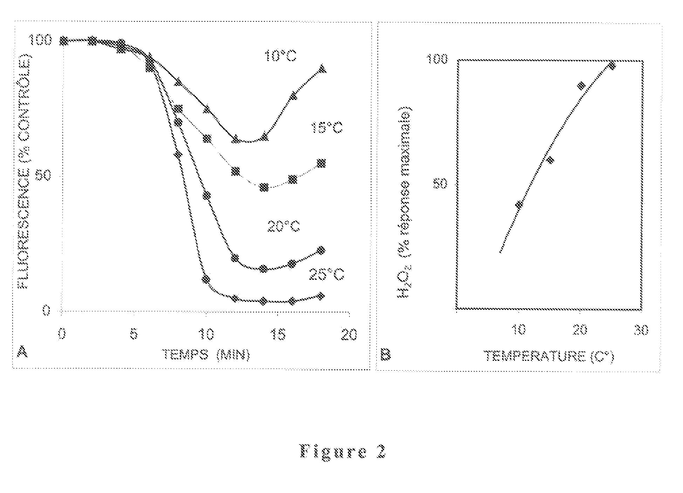

### b) Effet de la température sur l'accumulation de peroxyde (Figure 2A, Figure 2B)

L'accumulation en peroxyde induit par le signal 2'- fucosyl lactose (utilisé à la dose optimale de 10 nM) est plus faible à basse température.

### II) Elicitation d'un "burst oxydatif": génération d'anion superoxyde.

### Méthodologie

Préparation des protoplastes de *Rubus fruticosus* selon Vargas-Rechia (1998). Le rendement en protoplastes est de l'ordre 70 à 85% du nombre initial de cellules utilisées; la viabilité des protoplastes, de l'ordre de 90 à 95 %, a été contrôlée en utilisant l'indicateur bleu d'Evans.

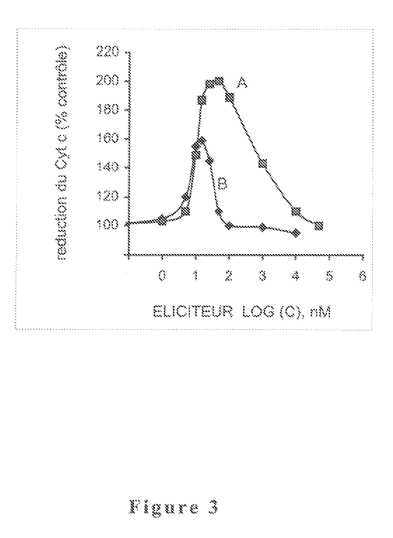

Le dosage du Cyt c a été effectué selon Nakanishi et al. (1991) de la manière suivante. Incubation à 25°C de 4.10⁶ protoplastes en présence de Cyt c (100 µM), et de l'éliciteur (0 à 100 µM) : 2'- fucosyl lactose (composé A), XXFGol (composé B). Les résultats sont indiqués dans la Figure 3.

Exploitation des données expérimentales : La vitesse de la réaction est donnée par (ΔF₃₄₀ min⁻¹). Trois courbes de cinétique au moins sont tracées par condition expérimentale. Un point sur le graphe correspond à la pente de la courbe de régression déduite de 6 courbes de cinétique au moins.

### Résultats

### Réduction du cytochrome c : détection et caractérisation de la réponse d'élicitation

La réponse d'élicitation est évaluée d'après la réduction du cytochrome c mesurée par la variation de l'absorbance à 340 nm; la valeur de référence 100% correspond au taux de réduction dans les contrôles (suspensions de protoplastes non élicités).

La figure 3 indique que la réponse est optimale à :
50 nM (200%) pour le composé A (2'- fucosyl lactose)
15 nM (159%) pour le composé B (XXFGol)

Le 2'- fucosyl lactose comme signal inducteur d'un "burst" oxydatif est plus performant que l'oligomère de xyloglucane (187% au lieu de 160% à 10 nM). Par contre, la dose optimale du 2'- fucosyl lactose est de 50 nM contre 15 nM pour l'oligomère de xyloglucane.

### III) Réponse d'adaptation au stress oxydant: Elicitation d'une activité glutathion-reductase

### Méthodologie

Préparation des protoplastes de *Rubus fruticosus* L. selon Vargas-Rechia et al (1998). Le rendement en protoplastes est de l'ordre 70 à 85% du nombre initial de cellules utilisées; la viabilité des protoplastes, de l'ordre de 90 à 95 %, a été contrôlée en utilisant l'indicateur bleu d'Evans.

### Dosage de l'activité glutathion-reductase (GR) selon Jahnke LS et al. (1991) :

GSSG (glutathion sous forme oxydée) est réduit en GSH (glutathion sous forme réduite) par l'enzyme glutathion-reductase (EC 1.6. 4.2); la réaction est couplée avec l'oxydation de NADPH en NADP dans le cycle catalytique (glutathion, glutathion-reductase, NADPH). L'activité glutathion-reductase se mesure en évaluant la formation de NADP dans le milieu, ce qui s'effectue en suivant la décroissance de l'absorbance à 340 nm.

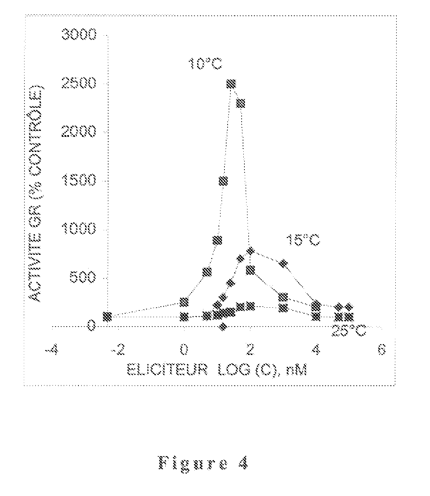

Essai : 4.10⁶ protoplastes dans 1 ml de tampon Tris-HCl buffer (pH 4.8) sont incubés à 10°C, 15°C, 25°C en présence de l'éliciteur (0 à 100 µM): 2' -fucosyl lactose (composé A), xyloglucane XXFGol (composé B). Après 10 min d'interaction, un extrait enzymatique est préparé selon Jahnke et al. (1991), et une aliquote du surnageant 16,000g (équivalent à 1 µg de protéines) est introduite dans le milieu réactionnel pH 7, 8 (80 mM K₂PO₄, 500 µM GSSG, 150 µM NADPH, 200 µM DTPA) pour le dosage de l'activité glutathion-reductase; l'enregistrement A₃₄₀ s'effectue pendant 1 min en utilisant un spectrophotomètre Beckman DU 640. Les résultats pour le composé A sont indiqués dans la figure 4.

Exploitation des données expérimentales : La vitesse de la réaction est donnée par ΔA₃₄₀ min⁻¹. Trois courbes de cinétique au moins sont tracées par condition expérimentale et par échantillon. Un point sur le graphe correspond à la valeur de la pente d'une courbe de régression déduite de 6 courbes de cinétique au moins.

### Résultats:

### Induction de l'activité glutation reductase par l'éliciteur 2'- fucosyl lactose (A)

La réponse d'élicitation est évaluée en mesurant la formation de NADP à 340 nm. La valeur de référence 100% correspond à la teneur en NADP dans les contrôles (suspensions de protoplastes non élicités).

La figure 4 indique que la réponse d'élicitation, dose-dépendante, est optimale à
25 nM (2500%) pour le composé A (2'-fucosyl lactose) appliqué à 10°C
100 nM (780 %) pour le composé A (2'-fucosyl lactose) appliqué à 15°C alors qu'aucune réponse significative n'est obtenue à 25°C. Par ailleurs, le composé B (XXFGol) donne des résultats similaires (non représenté).

### Références bibliographiques des méthodes utilisées dans les paragraphes I à III ci-dessus :

Vargas-Rechia,C., F. Reicher, M. Rita Sierakowski, A. Heyraud, H. Driguez, Y. Lienart (1998) Plant Physiol. 116, 1013-1021.

Apostol, I., P.F. Heinstein, P.S Low (1989) Plant Physiol. 90, 109-116.

Nakanishi, M., H. Takihara, Y. Minoru, K. Yagawa (1991) FEBS Letters 282: 91-94.

Jahnke LS, Hull MR, Long SP (1991) Plant Cell Environment 14, 97-104.

### IV) Induction d'un inhibiteur de thiol-protéase

### Méthodologie

Matériel végétal : cellules en suspension d'*Acer pseudoplatanus* L.

Essai : 2.10⁶ cellules d'*Acer pseudoplatanus* L. ont étés élicitées par 50 nM de 2'-fucosyl lactose (composé A) ou par 50 nM de trisaccharide methyl α-L-Fuc (1→2) β-D-Gal (1→2) β-D-Xyl (composé B) (synthétisé selon Lopez *et al.,* 1994) pendant 30 min ou pendant 42 h. Des inhibiteurs de protéase (IP) ont été préparés selon le protocole de Walker-Simmons (1977) à partir de cellules élicitées ou non. On a vérifié que la viabilité des cellules se maintenait à plus de 85 % pendant toute la durée de l'expérience.

Dosage de l'activité papaïne : le milieu réactionnel renferme une aliquote d'extrait IP (équivalent à 1 ou 2 µg de protéines) dans du tampon citrate phosphate de sodium (0. 1 M) pH 6 enrichi en cystéine-HCl (5 mM), en papaïne (EC 3.4.22.2) (0.48 unités), en *p*-nitroanilide N-α-benzoyl-D-L-arginine (BAPNA) (0.27 mM). Le dosage de l'activité repose sur la mesure de l'absorbance à 410 nm. La vitesse de la réaction est donnée par ΔA₄₁₀ min⁻¹.

Exploitation des données expérimentales : pour un échantillon donné, l'activité d'un inhibiteur IP isolé de cet échantillon est estimée en développant des cinétiques protéase (enregistrement à 410 nm pendant 10 min en présence ou non d'une quantité variable d'inhibiteur). Les conditions expérimentales retenues (temps d'incubation, concentration en substrat, en enzyme et en extrait IP) sont celles qui conduisent à des cinétiques linéaires et reproductibles. La vitesse initiale de la réaction est la pente α (A₄₁₀ .min ⁻¹) d'une courbe A₄₁₀ = f(t). Pour un échantillon donné, trois courbes au moins sont tracées et la vitesse initiale est déduite par régression linéaire. La capacité de modulation de l'activité protéase est exprimée en % de l'activité de contrôle (activité protéase sans inhibiteur IP).

### Résultats

### Induction d'un inhiteur de papaïne par l'éliciteur 2'-fucosyl lactose (A) ou methyl α-L-Fuc (1→2) β-D-Gal (1→2) β-D-Xyl (composé B)

La réponse d'élicitation est évaluée d'après l'inhibition de la papaïne mesurée en présence d'un inhibiteur de protéase préparé à partir de cellules élicitées par le 2' fucosyl lactose (2A) ou par le trisaccharide methyl α-L-Fuc (1→2) β-D-Gal (1→2) β-D-Xyl (2B); les résultats sont exprimés en % de l'activité de contrôle (activité papaïne dans les cellules non élicitées mesurée sans inhibiteur).

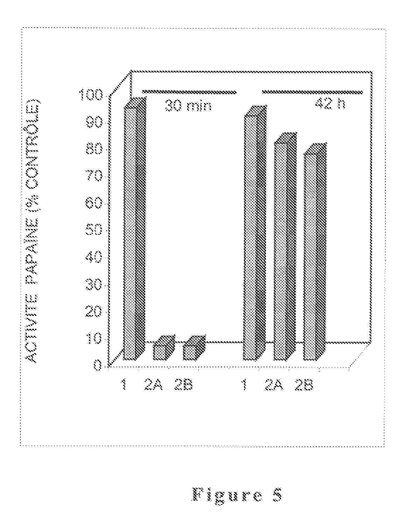

La figure 5 indique que la réponse des cellules varie avec le temps d'interaction avec l'oligosaccharide éliciteur. Pour une réaction précoce (après 30 min d'application de l'éliciteur), le 2'-fucosyl-lactose et le trisaccharide développent le même potentiel inhibiteur de papaïne (activité thiol-protéase, activité protéase dépendant de groupement SH). Un potentiel inhibiteur mais d'intensité bien plus faible s'exprime dans le cadre d'une réaction tardive (après 42h d'application de l'éliciteur).

### Références bibliographiques en rapport avec la méthodologie :

Walker-Simmons, M., and Ryan, C.A. (1977) Plant Physiol. 59, 437-439.

Lopez R, Montero E, Sanchez J, Canada A, Fernnandez- Mayoralas A, (1994) J. Org. Chem 59, 7027-7032.

### V) Elicitation d'une activité glycosyl hydrolase

Les réponses d'élicitation mises en évidence portent :
- sur l'induction d'une activité glycosidase, soit la réponse a) β-D- xylosidase (EC 3.2.1.37),
- sur l'induction d'une activité glycanase, soit sur les réponses b) 1,4 β-D-glucanase (EC 3.2.1.4), c) 1, 3 β-D- glucanase (EC 3.2.1.39), et d) endochitinase (EC 3.2.1.14).

### Méthodologie

Matériel végétal : cellules en suspension d'*Acer pseudoplatanus* L
Essai : 2.10⁶ cellules d'*Acer pseudoplatanus* L. ont été élicitées sous agitation circulaire (80 rpm), dans 25 ml de milieu de culture (sans 2, 4-D) par 50 nM de 2'-fucosyl lactose (composé A) ou 50 nM de trisaccharide methyl α-L-Fuc (1→2) β-D-Gal (1→2) β-D-Xyl (composé B) (synthetisé selon Lopez *et al.,* 1994) ou pendant un temps variable (0 à 42 h) en présence ou non d'un effecteur : cycloheximide (1 µM), d'acide okadaïque (5 nM), staurosporine (500 nM), ou boroglycine (500 nM). L'expérience d'élicitation est arrêtée en mettant les cellules dans de la glace. Les cellules récupérées après décantation et reprises dans environ 1 ml de tampon d'élicitation font l'objet d'une extraction protéique spécifique.

Extraction D-glycosylhydrolase. Les extraits enzymatiques sont préparés à partir des cellules élicitées ou non. Les cellules sont broyées à 0°C dans du tampon Tris-HCl (50 mM pH 7,2) contenant 1 M de NaCl avec un sonicateur Vibracell™ Bioblock, puissance maximale, pendant 3 fois 1 min. Les broyats sont centrifugés à 4°C (12000 g, 15 min) puis dialysés et concentrés sur unités d'ultrafiltration Ultrafree™ Millipore (seuil de coupure 10 kDa). Les rétentats, repris dans de l'eau distillée, sont les extraits bruts.

Dosage de l'activité β-D-xylosidase selon le protocole de Lee et Zeikus (1993) après incubation des extraits enzymatiques (2 à 4 µg de protéines) dans du tampon acétate de sodium (0.1 M, pH 5), à 40°C pendant un temps variable (90 à 210 min), en présence du substrat p-nitrophényl β-D-xylopyranoside (p-NPX) (7.3 µM). Après apport de Na₂CO₃ (0.1 M), les produits libérés sont dosés par spectrophotométrie à 410 nm.

Dosage de l'activité 1, 3 β-D-glucanase. Il repose sur le dosage colorimétrique (test au ferricyanure de Kidby et Davidson (1973) des unités réductrices du substrat (laminarine ou hexamère de laminarine) libérées au cours de l'hydrolyse. Le milieu réactionnel renferme l'extrait enzymatique (1 µg de protéines), le substrat (5 µM d'hexamère réduit de laminarine) dans 100 µl de tampon tampon acétate de sodium (0.1 M), pH 5.0); la réaction enzymatique à 40°C se développe pendant un temps variable (1 à 3h).

Dosage de l'activité 1,4 β-D-glucanase. Il repose sur le dosage colorimétrique (test au ferricyanure de Kidby et Davidson (1973) des unités réductrices du substrat cellopentaose reduit libérées au cours de l'hydrolyse. Le milieu réactionnel renferme l'extrait enzymatique (1 µg de protéines), du cellopentaose réduit (4 µM) dans 100 µl de tampon acétate de sodium (0.1 M), pH 5.0); la réaction enzymatique à 40°C se développe pendant un temps variable (1 à 3h).

Dosage de l'activité endochitinase. Il repose sur le dosage des sucres réducteurs libérés selon Somogyi (1952). Le milieu réactionnel renferme l'extrait enzymatique (1 µg de protéines), le substrat (25 µg de chitine ) dans 100 µl de tampon acétate de sodium (0.1 M), pH 5.0; la réaction enzymatique à 40°C se développe pendant un temps variable (1 à 5h).

Exploitation des données expérimentales. 2 cinétiques au moins ont été effectuées par échantillon, et par set expérimental. La vitesse de la réaction (ΔA ₄₁₀ min ⁻¹ par exemple) est obtenue par régression linéaire à partir de 4 courbes de cinétique. Les résultats sont exprimés par le rapport R (activité enzymatique dans des cellules élicitées /activité enzymatique dans des cellules de contrôle non élicitées).

### Résultats:

a) **Induction d'une réponse β-D- xylosidase.** La réponse précoce β-D-xylosidase est transitoire ; elle est maximale à partir de 15 min (R = 9 pour le composé A et R = 5 pour le composé B) ; et elle disparaît après 1h : R=1). Pour une durée du traitement éliciteur de 42h, on n'observe pas de réponse significative.
**b) Induction d'une réponse 1,4 β-D- glucanase.** La réponse précoce est transitoire (R de l'ordre de 5 après 20 min pour chaque éliciteur A ou B). Pour une durée du traitement éliciteur de 42h, la réponse R est de l'ordre de 4.
**c) Induction d'une réponse 1, 3 β-D- glucanase.** La réponse précoce est transitoire (R de l'ordre de 3 après 20 min pour chaque éliciteur A ou B). Pour une durée du traitement éliciteur de 42h, la réponse R, très élevée, est de l'ordre de 12.
**d) Induction d'une réponse endochitinase.** La réponse précoce est transitoire (R de l'ordre de 6 vers 25 min pour chaque éliciteur A ou B). Pour un traitement éliciteur de 42h, on n'a pas décelé d'activation enzymatique.

On remarque qu'en présence d'un l'inhibiteur de synthèse protéique (cycloheximide), toutes les réponses précoces se maintiennent alors que les réponses tardives diminuent avec une valeur de R de l'ordre de 2 (pour l'activité 1,4 β-D-glucanase ) ou de 3 (pour l'activité 1 ,3 β-D- glucanase). A l'opposé, les réponses précoces (à l'exception de l'activité 1,3 β-D- glucanase) sont modulées par un effecteur post transcriptionnel comme la boroglycine ou l'acide okadaïque alors que les réponses tardives ne sont pas affectées.

### Références bibliographiques en rapport avec la méthodologie citée dans le paragraphe V :

Lopez R, Montero E, Sanchez F, Canada J, Fernandez-Mayorales A (1994). J. Org. Chem. 59, 7027-7032.
Lee Y.E et Zeikus J.G (1993) J. Gen. Microbiol. 139, 1235-1246
Somogyi M. (1952). J. Biol. Chem. 195, 19-23.
Kidby DE et Davidson DJ (1973) Anal Biochem, 55,321-325

### VI) Elicitation d'une activité phospholipase D

### Méthodologie

Matériel végétal : cellules en suspension d'Acer pseudoplatanus L.

Activité phospholipase D (E.C: 3.1.4.4) (Plase D): il s'agit d'une phosphatidylcholine phosphatidohydrolase qui libère, d'après le schéma ci dessous, le groupement O-R3. Dans la mesure où O-R3 est marqué (un fluorochrome par exemple) quantifier ce groupement reviendra à doser l'activité Plase D. Pour les expériences le substrat utilisé est de la phosphatidylcholine conjuguée à un fluorochrome, soit le produit nitrobenzoxadiazole phosphoethanolamine (NBD-PE). Les longueurs d'ondes d'excitation et d'émission retenues du fluorochrome sont 460 nm et 534 nm respectivement. 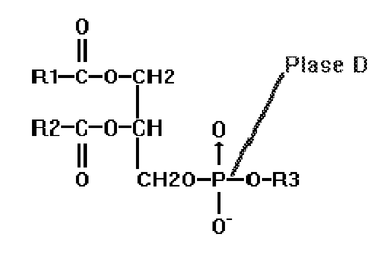
R1: CH₃(CH₂)₁₄
R2: CH₃(CH₂)₁₄
R3: -CH₂-CH₂-NH₂

Principe : doser l'activité Plase D revient à estimer la variation de fluorescence à 534 nm d'un milieu réactionnel avec un spectrofluorimètre (Perkin Elmer) .

Essai : le milieu réactionnel dans un puits de plaques de microtitration est le suivant : 1.3 10 ⁷ cellules d'*Acer pseudoplatanus* L. sont incubées dans un tampon HEPES 50 mM, pH 6,8 enrichi en CaCl₂ (1µM) , ATP (2 µM), octyl-D-glucoside 50 µM, GTP (6 µM) en présence du substrat NBD-PE (4 µM), en présence ou en l'absence d'un éliciteur (0-100 nM) : 2'-fucosyl-lactose (FL), composé A ; XXFGol, composé B, en présence ou non d'un effecteur méthyl jasmonate (0-5 nM). Le dosage de l'activité Plase D s'effectue par mesure de la fluorescence à 534 nm.

Exploitation des données expérimentales. Pour chaque échantillon on enregistre trois cinétiques au moins; l'activité Plase D sera donnée par la pente de la courbe de régression. Les résultats sont exprimés par Δ F₅₃₄ min⁻¹. Un point sur le graphe correspond au traitement par régression linéaire de 2 courbes de cinétique au moins provenant de 2 échantillons différents.

### Résultats:

### Induction de l'activité Plase D par l'éliciteur 2'- fucosyl lactose (A) ou par le xyloglucane XXFGol (B).

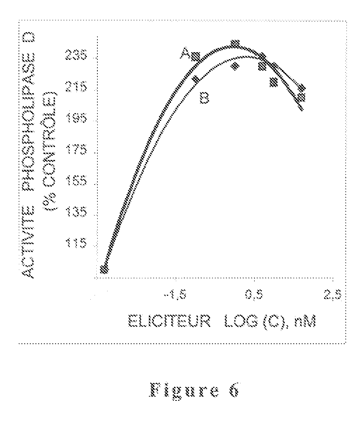

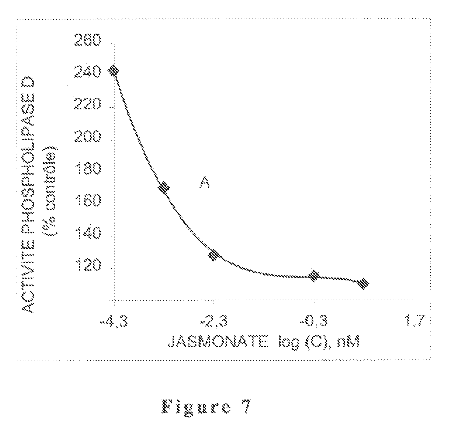

La réponse d'élicitation Plase D est évaluée d'après la variation de fluorescence à 512 nm; la valeur de référence 100% correspond à la fluorescence dans les contrôles (cellules non élicitées)
**a) Effet de la dose en éliciteur.** La figure 6 indique que le 2'-fucosyl lactose et l'oligomère XXFGol sont des éliciteurs d'activité Plase D. La réponse est optimale pour une concentration très faible en éliciteur, soit 1nM (244%) pour le 2'-fucosyl lactose (A) et 1,7 nM (230 %) pour XXFGol (B).
**b) Effet antagoniste du methyl jasmonate.** La figure 7 indique que le methyl jasmonate (de 0 à 5 nM) et le 2'-fucosyl lactose (A) (1 nm) sont antagonistes, et que cette réponse est dose dépendante.

### VII) ETUDE DU POTENTIEL ELICITEUR DU XYLOGLUCANE OU DERIVE CHEZ LA VIGNE : EFFET INDUCTEUR D'UNE RESISTANCE AU FROID

### - EXEMPLE 1: mise en évidence de l'effet éliciteur du xyloglucane ou dérivé

### Conditions expérimentales :

Des plants provenant de différents cépages (Chenin, Grolleau, Carignan, Cabernet sauvignon, Cabernet Sauvignon, Pinot noir, Merlot, Chardonnay, Gamay...) sont utilisés pour l'étude. Chaque échantillon, composé de 5 à 10 plants, est traité par pulvérisation foliaire à la fin du développement des bourgeons (à compter du stade végétatif 7 de l'échelle BBCH), ou en période de développement des inflorescences (à compter du stade végétatif 12) ou au début de la floraison (à compter du stade 19), avec l'éliciteur (oligomère: XXFG; dérivé : 2'- fucosyl lactose) en solution à une dose variable (0,03 mg/l ≤ dose ≤ 3,3 mg/l; la vaporisation de 2.5 ml de solution par plante se fait à l'aide d'un vaporisateur (écart de +/-1%).

Après traitement, les plants sont exposés à un stress froid de durée et d'intensité variables (par exemple, température variant de - 2°C à -5°C; durée inférieure ou égale à 240 min).

Après l'exposition au froid, les plants sont mis en chambre climatique à 20°C avec une alternance jour/nuit de 12 h. L'aspect des feuilles est observé 3h, 24h, 48 h, 72 h après la sortie du froid. Les effets de froid sont évalués en observant les nécroses foliaires induites par le gel et les plantes sont conservées plusieurs mois pour suivre leur développement ultérieur.

On compte la proportion P (%) de nécroses foliaires observées 3h ou 24h ou 48 h ou 72 h après le stress froid , et on exprime les résultats par l'indice de protection I =(100- P)%.

### Résultats: tableau récapitulatif pour les plants du cépage Chenin.

Les résultats concernant les plants témoins (A) traités à l'eau et les plants élicités par XXFG à la dose d, d/10, d/50, d/100 (d =3,3 mg/l) (B) sont exprimés par l'indice de protection au froid I =(100- P)%, P étant la proportion (%) de nécroses foliaires observées 12 h après le stress.

| Stress Froid | -2°C 240 min | -3°C 240 min | -4°C 110 min | -5°C 120 min |
|---|---|---|---|---|
| A (indice %) | 20 | 0 | 0 | 0 |
| B (indice %) | | | | |
| d | 100 | 100 | 100 | 100 |
| d/10 | 100 | 100 | 100 | 100 |
| d/50 | 100 | 100 | 90 | 75 |
| d/100 | 80 | 65 | 55 | 40 |

Les plants traités par XXFG à la dose de 3,3 mg/l résistent à des niveaux de stress froid qui détruisent les feuilles des témoins traitées à l'eau : la coloration des feuilles des plants élicités reste normale au lieu de virer au vert sombre dès le dégel (comme cela s'observe pour les témoins traités à l'eau), et aucun signe de nécrose n'apparaît après 12 h comme cela s'observe pour les témoins traités à l'eau). On a noté que l'application de l'éliciteur n'apporte pas de perturbation dans l'évolution de la plante étant donné que le développement des plants élicités après le stress froid est comparable à celui des plants témoins non exposés au froid.

Le tableau indique aussi que des solutions d'éliciteur diluées au 1/10, 1/50 et 1/ 100 sont capables, mais avec une efficacité parfois moindre, d'induire une résistance au froid de la vigne.

Par ailleurs, on a noté que :
- l'application d'un dérivé de xyloglucane comme le composé 2'-fucosyl lactose sont capables de reproduire l'effet inducteur de résistance au froid, avec une efficacité égale ou légèrement inférieure ;
- l'éliciteur est actif sur tous les cépages testés mais chaque cépage a une sensibilité spécifique; par exemple, les cépages Pinot noir et Chenin sont des cépages très réceptifs à un traitement éliciteur.

### - EXEMPLE 2 : la résistance au gel varie selon la dose d'éliciteur

Des plants de Chenin ont été élicités par XXFG utilisé à des doses variables : d, d/10, d/50, d/100 (d =3,3 mg/1) avant d'être exposés à -3°C pendant un temps variable (a: 165 min, b: 195 min, c: 210 min, d: 225 min).

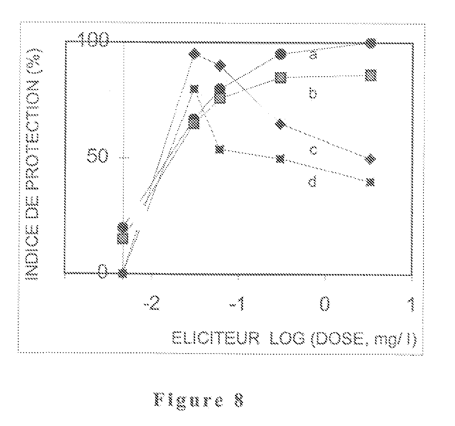

La figure 8 reporte les résultats obtenus et exprimés par l'indice de protection au froid I =(100- P)%, P étant la proportion (%) de nécroses foliaires observées 24h après le stress.

La réponse d'élicitation varie en fonction de la dose d'éliciteur, et l'efficacité d'une solution donnée est différente selon l'intensité du stress froid.

Les courbes de réponse révèlent 2 types de réponse selon l'intensité du stress: pour un stress faible, l'effet stimulateur de résistance croît avec la dose pour atteindre un palier (courbes a et b) Par contre, pour un stress d'intensité élevée on observe une dose optimale de réponse au delà de laquelle l'effet éliciteur diminue (courbes c et d). On a observé que l'application de 2'-fucosyl lactose conduit à des courbes de réponse similaires.

### LEGENDE DES FIGURES

Figure 1: Génération de H₂O₂ déclenchée par l'application de l'éliciteur A (2'-fucosyl lactose ; courbe délimitée par des carrés) ou B (xyloglucane XXFGol ; courbe délimitée par des cercles). La vitesse de la réaction, soit ΔF₅₁₂ min⁻¹, a été évaluée d'après le "quenching" de la pyranine enregistré pendant 15 min. La concentration en éliciteur est indiquée en abscisse, et l'intensité de fluorescence est indiquée en ordonnée.
Figure 2: Génération de H₂O₂ déclenchée par l'application de l'éliciteur A (2-' fucosyl lactose, 10 nM). La vitesse de la réaction, soit ΔF₅₁₂ min⁻¹ , a été évaluée d'après le "quenching" de la pyranine enregistré pendant 20 min à 25°C, 20°C, 15°C, 10°. (A) : courbes de cinétique : le temps est indiqué en abscisse, et l'intensité de fluorescence est indiquée en ordonnée: chaque courbe illustre le résultat obtenu à une température donnée ; (B) variation de la réponse optimale en fonction de la température : la température est indiquée en abscisse, et la production de H₂O₂ à 25°C est indiquée en ordonnée; 100% correspond à la production maximale de H₂O₂ à 25°C.
Figure 3: Génération d'anion superoxyde déclenchée par l'application de l'éliciteur A (2'-fucosyl lactose ; courbe délimitée par des carrés) ou B (xyloglucane XXFGol; courbe délimitée par des losanges). La vitesse de réduction du cytochrome correspond à ΔA₃₄₀ min⁻¹. La concentration en éliciteur est indiquée en abscisse, et la teneur en cytochrome c réduit est indiquée en ordonnée.
Figure 4 : Elicitation de l'activité glutathion reductation induite par l'application de l'éliciteur A (2'- fucosyl lactose). La vitesse de la réaction d'élicitation, soit ΔA₃₄₀ min⁻¹ est mesurée à 10°C (courbe délimitée par des carrés), 15°C (courbe délimitée par des losanges), et 25°C (courbe délimitée par des cercles).
Figure 5: Evaluation de l'activité inhibiteur de papaïne dans des cellules élicitées par le 2'- fucosyl lactose appliqué à 50 nM pendant 30 min ou pendant 42h (2A) ou par le trisaccharide methyl α-L-Fuc (1→2) β-D-Gal (1→2) β-D-Xyl appliqué à 50 nM pendant 30 min ou pendant 42h (2B) ou dans des cellules non élicitées (1). La vitesse de la réaction, soit ΔA₄₁₀ min⁻¹ est exprimée en % de l'activité papaïne sans inhibiteur.
Figure 6: Elicitation d'activité Plase D déclenchée par l'application de l'éliciteur A (2'-fucosyl lactose ; courbe délimitée par des carrés) ou B (xyloglucane XXFGol ; courbe délimitée par des losanges). La vitesse de la réaction, soit ΔF₅₁₂ min⁻¹ est exprimée en % de l'activité Plase D dans les contrôles (cellules non élicitées).
Figure 7: Elicitation d'activité Plase D déclenchée par l'application de l'éliciteur A (2'-fucosyl lactose) utilisé à la concentration optimale de 1nM en présence de methyl jasmonate. La vitesse de réaction, soit ΔF₅₁₂ min⁻¹ est exprimée en % de l'activité Plase D dans les contrôles (cellules non élicitées).
Figure 8 : Protection contre le froid de plants de Chenin élicités par XXFG utilisé à des doses variables : d, d/10, d/50, d/100 (d =3,3 mg/l) avant d'être exposés à -3°C pendant un temps variable (a: 165 min, b: 195 min, c: 210 min, d: 225 min) ; les résultats obtenus sont exprimés par l'indice de protection au froid I =(100- P)%, P étant la proportion (%) de nécroses foliaires observées 24h après le stress.

## Revendications

1. Utilisation d'un composé comprenant une structure osidique de formule :
X₁-X₂-X₃-(X₄)ₙ
dans laquelle X₁, X₂, X₃, et X₄, indépendamment les uns des autres, représentent un ose choisi parmi le glucose, le galactose, le xylose, le fucose, ou l'arabinose, cet ose étant le cas échéant sous forme réduite et/ou étant substitué, notamment par un groupe alkyle ou acyle, tel qu'un groupe méthyle ou acétyle, et n représente 0 ou 1,
X₁, X₂, X₃, et X₄, indépendamment les uns des autres, étant le cas échéant substitué par un ou plusieurs oses choisis parmi le glucose, le galactose, le xylose, le fucose, ou l'arabinose, et/ou par un ou plusieurs enchaînements osidiques de formule X₅-X₆-(X₇)ₘ dans laquelle X₅, X₆, et X₇, indépendamment les uns des autres, représentent un ose choisi parmi le glucose, le galactose, le xylose, le fucose, ou l'arabinose, et m représente 0 ou 1,
l'un au moins de X₁, X₂, X₃, ou X₄, ou, le cas échéant, de X₅, X₆, ou X₇ représentant un xylose ou un fucose,
ou d'un composé dérivé de ceux définis ci-dessus, notamment par modification ou substitution d'un ou plusieurs oses susmentionnés, lesdits composés et leurs dérivés ayant la propriété de :
- stimuler la glutathion réductase,
- et/ou de stimuler la phospholipase D chez les plantes,
- et/ou de stimuler des glycosylhydrolases,
dans le cadre d'applications liées aux propriétés susmentionnées desdits composés, à savoir :
- l'adaptation des plantes à un stress abiotique, tel que l'adaptation au froid, ou à un stress hydrique tel que la sécheresse, l'humidité ou la salinité,
- le contrôle de la floraison,
- le contrôle de la fructification,
- l'induction de réactions de défense contre les pathogènes tels que les bactéries, virus, champignons, pourvu que pour l'adaptation des plantes à un stress abiotique, le contrôle de la floraison et le contrôle de la fructification les composés ne soient pas choisis dans le groupe constitué par le méthyl(α-L-Fuc(1→2)β-D-Gal(1→2)α-D-Xyl), le α-D-Fuc(1→2)β-D-Gal(1→4)β-D-Glc, XXFG et XXFGol.

2. Utilisation selon la revendication 1, de composés dans lesquels les oses sont sous forme α ou β, le cas échéant sous forme pyranose ou furanose, et sont liés entre eux par des liaisons du type 1→2, 1→3, 1→4, ou 1→6.

3. Utilisation selon les revendications 1 ou 2, de composés de formule:
X₁-X₂-X₃-(X₄)ₙ
dans laquelle X₁, X₂, X₃, et X₄, indépendamment les uns des autres, représentent un ose choisi parmi le glucose, le galactose, le xylose, le fucose, ou l'arabinose, et n représente 0 ou 1, l'un au moins de X₁, X₂, X₃, ou X₄, représentant un xylose ou un fucose.

4. Utilisation selon la revendication 3 :
- de composés de formule :
X₁-X₂-X₃-(X₄)ₙ
dans laquelle :
. X₁ représente un fucose,
. X₂ représente un galactose,
. X₃ représente le xylose ou le glucose,
. X₄ représente un glucose, le cas échéant substitué par un ose tel que le glucose,
. chacun de X₁, X₂, X₃, et X₄ étant des résidus glycosyl (L) ou (D) sous forme α ou β, et n représente 0 ou 1,
. et n représente 0 ou 1,
X₁, X₂, X₃, et X₄, étant le cas échéant substitués, notamment par un groupe alkyle, tel qu'un groupe méthyle, tels que les composés de formule :
α-D-Fuc(1→2)β-D-Gal(1→2)α-D-Xyl
α-D-Fuc(1→2)β-D-Gal(1→4)β-D-Glc, ou 2'-fucosyl lactose
méthyl(α-D-Fuc(1→2)β-D-Gal(1→2)β-D-Xyl)
méthyl(α-L-Fuc(1→2)β-D-Gal(1→2)α-D-Xyl)
α-D-Fuc(1→2)β-D-Gal(1→2)α-D-Xyl(1→6)β-D-Glc
α-L-Fuc(1→2)β-D-Gal(1→2)β-D-Xyl(1→6)β-D-Glc
α-L-Fuc(1→2)β-D-Gal(1→2)α-D-Xyl(1→6)β-D-Glc(1→4)β-D-Glc, encore
désigné FG,
le résidu osidique en position X₃ lorsque n = 0, ou en position X₄, ou substituant celui en position X₄, dans les formules des composés ci-dessus, étant le cas échéant sous forme réduite,
- ou de composés de formule :
| | | |
|---|---|---|
| α-D-Gal(1→2)β-D-Xyl(1→6)β-D-Glc(1-4)β-D-Glc | | encore désigné LG |
| α-D-Xyl(1→2)β-D-Gal(1→2)β-D-Xyl | | |
| α-D-Xyl(1→6)β-D-Glc(1→4)β-D-Glc | | encore désigné XG |
| β-D-Xyl(1→4)β-D-Glc(1→4)β-D-Glc | | |
| α-D-Xyl(1→2)β-D-Glc(1→4)β-D-Glc | | |
| β-L-Ara(1→3)α-L-Ara(1→2)α-D-Xyl | | composé T |
| α-L-Ara(1→2) | β-D-Glc | composé A |
| α-D-Xyl(1→6) | | |
| α-D-Xyl(1→6) | β-D-Glc | composé B |
| β-D-Xyl(1→2) | | |
| α-L-Ara(1→2)α-D-Xyl(1→6)β-D-Glc | | composé S |
| α-L-Ara(1→3)β-D-Xyl(1→2) | β-D-Glc | composé C |
| α-D-Xyl(1→6) | | |
dans lesquelles Fuc représente le fucose, Gal représente le galactose, Glc représente le glucose, Ara représente l'arabinose, et Xyl représente le xylose.

5. Utilisation selon la revendication 1 ou 2, de composés de formule :
X₁-X₂-X₃-(X₄)ₙ
dans laquelle n représente 0 ou 1, X₁, X₂, X₃, et X₄, représentent un glucose, le cas échéant sous forme réduite, sous forme α ou β, l'un au moins de X₁, X₂, X₃, ou X₄, étant substitué par un ou plusieurs oses choisis parmi le glucose, le galactose, le xylose, le fucose, ou l'arabinose, et/ou par un ou plusieurs enchaînements osidiques de formule X₅-X₆-(X₇)ₘ dans laquelle X₅, X₆, et X₇, indépendamment les uns des autres, représentent un ose choisi parmi le glucose, le galactose, le xylose, le fucose, ou l'arabinose, et m représente 0 ou 1,
l'un au moins de X₅, X₆, ou X₇ représentant un xylose ou un fucose.

6. Utilisation selon la revendication 5, de composés de formule :
X₁-X₂-X₃-(X₄)ₙ
dans laquelle n représente 0 ou 1, X₁, X₂, X₃, et X₄, représentent un glucose, le cas échéant sous forme réduite, sous forme α ou β, l'un au moins de X₁, X₂, X₃, ou X₄, étant substitué par un ou plusieurs oses choisis parmi le glucose, le galactose, le xylose, le fucose, ou l'arabinose, et/ou par un ou plusieurs enchaînements osidiques de formule X₅-X₆-(X₇)ₘ dans laquelle dans laquelle X₅ représente un xylose, X₆ représente un galactose, X₇ représente un fucose, et m représente 0 ou 1.

7. Utilisation selon l'une des revendications 5 ou 6, de composés de formules : ou les composés désignés XL, XLGG, XLXG, LS, AXXG,
le résidu glucose en position X₄ dans les formules des composés ci-dessus, ou celui en position X₃ dans le composé XXG, étant le cas échéant sous forme réduite.

8. Utilisation selon la revendication 1 ou 2, de polymères ou d'oligomères de formule [X₁-X₂-X₃-(X₄)ₙ]_{N} dans laquelle :
- n représente 0 ou 1, X₁, X₂, X₃, et X₄, représentent un glucose, le cas échéant sous forme réduite, sous forme α ou β, l'un au moins de X₁, X₂, X₃, ou X₄, étant substitué par un ou plusieurs oses choisis parmi le glucose, le galactose, le xylose, le fucose, ou l'arabinose, et/ou par un ou plusieurs enchaînements osidiques de formule X₅-X₆-(X₇)ₘ dans laquelle X₅, X₆, et X₇, indépendamment les uns des autres, représentent un ose choisi parmi le glucose, le galactose, le xylose, le fucose, ou l'arabinose, et m représente 0 ou 1, l'un au moins de X₅, X₆, ou X₇ représentant un xylose ou un fucose,
- N représente un nombre entier compris entre environ 50 et environ 300, et de préférence compris entre environ 50 et environ 100,
- ou N représente un nombre entier compris entre environ 2 et environ 50, et de préférence compris entre environ 2 et environ 20, notamment entre 5 et 12.

9. Utilisation selon la revendication 1 ou 2, d'enchaînements successifs d'au moins deux unités représentées par un composé de formule X₁-X₂-X₃-(X₄)ₙ dans laquelle n représente 0 ou 1, X₁, X₂, X₃, et X₄, représentent un glucose, le cas échéant sous forme réduite, sous forme α ou β, l'un au moins de X₁, X₂, X₃, ou X₄, étant substitué par un ou plusieurs oses choisis parmi le glucose, le galactose, le xylose, le fucose, ou l'arabinose, et/ou par un ou plusieurs enchaînements osidiques de formule X₅-X₆-(X₇)ₘ dans laquelle X₅, X₆, et X₇, indépendamment les uns des autres, représentent un ose choisi parmi le glucose, le galactose, le xylose, le fucose, ou l'arabinose, et m représente 0 ou 1, l'un au moins de X₅, X₆, ou X₇ représentant un xylose ou un fucose,
l'une au moins des unités desdits enchaînements étant telle que l'un au moins des oses ou enchaînements osidiques liés à X₁, X₂, X₃, ou X₄, est respectivement différent de l'un des oses ou enchaînements osidiques liés à X₁, X₂, X₃, ou X₄, d'une ou plusieurs des autres unités desdits enchaînements.

10. Utilisation selon la revendication 8 ou 9, de polymères de formule [X₁-X₂-X₃-(X₄)ₙ]_{N} définie dans la revendication 8, dans laquelle N représente un nombre entier inférieur ou égal à 12, et de préférence inférieur ou égal à 5, ou d'enchaînements d'unités tels que définis dans la revendication 9, dans lesquels le nombre d'unités est inférieur ou égal à 12, de préférence inférieur ou égal à 5.

11. Utilisation selon l'une des revendications 8 à 10, de composés de formule : le résidu glucose en position terminale dans les formules des composés ci-dessus, étant le cas échéant sous forme réduite, et sous forme α ou β,
ou encore les composés de formule XXFXXG, XLFGXXXG, XFFGXXXG, XXFGAXXG, GFGGFG.

12. Utilisation selon l'une des revendications 1 à 11, de polymères ou d'oligomères de xyloglucane, ou de leurs dérivés, tels qu'obtenus :
- à partir de plantes, notamment par extraction de semences, feuilles, racines, fruits, en particulier à partir de pommes, de tubercules de pommes de terre, d'*Echinacea,* ou de graines de *Tropaeolum,* ou d'*Hymenaea,*
- à partir de suspensions cellulaires de plantes, notamment d'*Acer,* de *Rosa,* de *Mentha,* de *Nicotiana,* de *Populus,* de *Dioscorea deltoidea,* de *Digitalis lanata,* ou d'*Echinacea,* en particulier par extraction de parois cellulaires, ou par isolement à partir du milieu de culture,
- à partir de champignons tels que *Lentinus edodes, Ganoderma lucidum, Schizophyllum commune, Trametes versicolor, Inonotus obliquus, et Flammulina velutipes,* notamment par extraction du mycélium, ou par isolement d'un milieu de culture,
- à partir d'algues, telles que *Ulva lactuca,* ou *Ulva rigida.*

13. Utilisation selon l'une des revendications 1 à 11, d'oligomères de xyloglucane, ou de dérivés, tels qu'obtenus :
* par synthèse chimique ou chemoenzymatique, notamment par endo-transglycosylation,
* par fermentation de souches bactériennes génétiquement modifiées,
* par hydrolyse de polymères renfermant du xyloglucane, ou de glycanes représentant la partie glycane de glycoprotéines, à l'aide d'enzymes appropriées telles que :
- des cellulases, et plus particulièrement d'endo-β-D-1,4-glucanases de *Trichoderma,* telle que celle de *Trichoderma viride,* ou de *T. reesei,* ou celle d'*Aspergillus,* telle que celle d*'A. niger,* et d'exo cellulases d*'Irpex lacteus,* ces enzymes étant des enzymes d'extraction ou recombinantes,
- des glycosidases telles que β-D-glucosidase, α-L-fucosidase, α-L-xylosidase, ces enzymes étant des enzymes d'extraction ou recombinantes,
ledit traitement enzymatique étant suivi de plusieurs étapes de purification des oligomères de xyloglucane obtenus, notamment par chromatographie.

14. Procédé de stimulation de la glutathion réductase chez les plantes, **caractérisé en ce qu'**il comprend une étape de traitement des plantes avec au moins un composé défini dans l'une des revendications 1 à 13, notamment par irrigation du sol sur lequel ces plantes sont cultivées, avec une composition comprenant ledit composé, ou par enrobage des semences avec une telle composition, ou par pulvérisation foliaire en champ d'une telle composition sur les plantes à traiter.

15. Application du procédé selon la revendication 14, à la mise en oeuvre d'un procédé d'adaptation des plantes à un stress abiotique, tel que l'adaptation au froid, ou à un stress hydrique tel que la sécheresse, l'humidité ou la salinité.

16. Procédé de stimulation de la production de la phospholipase D chez les plantes, **caractérisé en ce qu'**il comprend une étape de traitement des plantes avec au moins un composé défini dans l'une des revendications 1 à 13, notamment par irrigation du sol sur lequel ces plantes sont cultivées, avec une composition comprenant ledit composé, ou par enrobage des semences avec une telle composition, ou par pulvérisation foliaire en champ d'une telle composition sur les plantes à traiter.

17. Application du procédé selon la revendication 16, à la mise en oeuvre d'un procédé de contrôle de la floraison, et plus particulièrement d'un procédé de contrôle de l'induction florale, de la durée de la floraison, et de l'abscission des fleurs, et/ou à la mise en oeuvre d'un procédé de contrôle de la fructification des plantes, et plus particulièrement d'un procédé de contrôle du déclenchement et de la durée de la maturation des fruits, de l'abscission des feuilles et des fruits.

18. Procédé de stimulation de la production des glycosylhydrolases chez les plantes, **caractérisé en ce qu'**il comprend une étape de traitement des plantes avec au moins un composé défini dans l'une des revendications 1 à 13, notamment par irrigation du sol sur lequel ces plantes sont cultivées, avec une composition comprenant ledit composé, ou par enrobage des semences avec une telle composition, ou par pulvérisation foliaire en champ d'une telle composition sur les plantes à traiter.

19. Application du procédé selon la revendication 18, à la mise en oeuvre d'un procédé d'induction de réactions de défense contre les pathogènes tels que les bactéries, virus, champignons.
